# EUROPÄISCHE PATENTSCHRIFT

(11) **EP 3 626 502 B1**
(45) Veröffentlichungstag und Bekanntmachung des Hinweises auf die Patenterteilung: **23.02.2022**
(21) Anmeldenummer: 19184593.2
(22) Anmeldetag: 05.07.2019
(51) Int. Cl.: B60K 17/356

(54) **ANTRIEBSSTRANG FÜR EIN LANDWIRTSCHAFTLICHES FAHRZEUG**
DRIVE TRAIN FOR AGRICULTURAL VEHICLE
CHAÎNE CINÉMATIQUE POUR UN VÉHICULE AGRICOLE

(30) Priorität: 18.09.2018 DE 102018122856
(43) Veröffentlichungstag der Anmeldung: 25.03.2020
(73) Patentinhaber: CLAAS Tractor S.A.S., 78141 Vélizy-Villacoublay Cedex (FR)
(72) Erfinder: Villette, Clément, 92190 Meudon (FR)
(74) Vertreter: CLAAS Gruppe

(56) Entgegenhaltungen:
- EP-A2- 1 990 230
- WO-A1-2006/034520
- DE-A1- 10 319 108
- DE-A1-102007 053 266
- US-A- 5 993 350

## Beschreibung

Die vorliegende Erfindung betrifft einen Antriebsstrang gemäß dem Oberbegriff des Anspruches 1. Weiterhin betrifft die vorliegende Erfindung ein landwirtschaftliches Fahrzeug gemäß dem Oberbegriff des Anspruches 7.

Aus der DE 10 2007 021 733 B4 ist ein Antriebsstrang für ein landwirtschaftliches Fahrzeug bekannt. Das Fahrzeug weist eine lenkbare Vorderachse und eine weitere Fahrzeugachse auf. Ein als Verbrennungsmotor ausgebildetes Hauptantriebselement stellt ein Drehmoment bereit, welches an ein leistungsverzweigtes Umlaufrädergetriebe übertragen wird. Eine von einer Zahnradestufe des Umlaufrädergetriebes angetriebene, verstellbare Hydropumpe bildet einen hydrostatischen Leistungszweig. Die Hydropumpe treibt zwei Hydromotoren an, von denen der eine Hydromotor über eine Zahnradstufe eine Ausgangswelle des Umlaufrädergetriebes antreibt, welche dem Antrieb der weiteren Fahrzeugachse dient. Der andere Hydromotor treibt wahlweise die Vorderachse an. Es sind eine erste und eine zweite schaltbare Kupplung vorgesehen, wobei die erste Kupplung der Verbindung und Trennung des die Vorderachse antreibenden Hydromotors dient, während die zweite Kupplung der Verbindung und Trennung der Vorderachse und der weiteren Fahrzeugachse dient. Die erste und die zweite Kupplung sind unabhängig voneinander betätigbar. Durch das Öffnen der zweiten Kupplung, während die erste Kupplung geschlossen gehalten bleibt, lassen sich unterschiedliche Drehmomente und Drehzahlen an der Vorderachse und der weiteren Fahrzeugachse einstellen. Eine alternative Ausbildung sieht vor, anstelle der Hydropumpe und der zwei von dieser angetriebenen Hydromotoren zwei Elektromotoren einzusetzen. Als relevanter Stand der Technick sind auch DE 10319108 und DE 10 2007 053266 anzusehen.

Der vorliegenden Erfindung liegt die Aufgabe zugrunde, einen Antriebsstrang der eingangs genannten Art sowie ein landwirtschaftliches Fahrzeug mit einem Antriebsstrang weiterzubilden, welche sich durch einen einfacheren Aufbau und einen effizienteren Betrieb auszeichnen.

Die Aufgabe wird erfindungsgemäß durch einen Antriebsstrang mit den Merkmalen des Anspruches 1 gelöst. Weiterhin wird die Aufgabe hinsichtlich des landwirtschaftlichen Fahrzeugs entsprechend den Merkmalen des Anspruches 7 gelöst. Gemäß dem Anspruch 1 wird ein Antriebsstrang für ein landwirtschaftliches Fahrzeug mit einer lenkbaren Vorderachse und zumindest einer weiteren Fahrzeugachse vorgeschlagen, wobei der Antriebsstrang ein Hauptantriebselement zur Bereitstellung eines Drehmomentes, welches mittels einer Antriebswelle auf ein Hauptgetriebe übertragbar ist, sowie eine schaltbare Kupplung zum wahlweisen Antreiben der Vorderachse in Verbindung mit der weiteren Fahrzeugachse umfasst, wobei das Hauptgetriebe trieblich mit der Vorderachse und/oder der weiteren Fahrzeugachse verbindbar und das Drehmoment zum Antreiben der Vorderachse und/oder der weiteren Fahrzeugachse auf diese verteilbar ist. Erfindungsgemäß ist vorgesehen, dass ein Teilantriebsstrang vorgesehen ist, an dem nur ein, Elektromotor angeordnet ist, und der Elektromotor durch eine ansteuerbare Drehmomentübertragungsvorrichtung mit dem Antriebsstrang trieblich verbindbar ist. Durch den einen Elektromotor, der durch die, insbesondere genau eine, ansteuerbare Drehmomentübertragungsvorrichtung mit dem Antriebsstrang wahlweise trieblich verbindbar ist, lässt sich die von dem Antriebsstrang auf die Vorderachse übertragene Antriebsdrehzahl gegenüber der vom Antriebsstrang bereitgestellten Antriebsdrehzahl an der weiteren Fahrzeugachse erhöhen, so dass bei einer engen Kurvenfahrt, insbesondere im Vorgewende eines von dem landwirtschaftlichen Fahrzeug befahrenen Feldes, eine Lenkunterstützung ermöglicht wird. Dies ist insbesondere dann vorteilhaft, wenn bei einem Allradbetrieb des Antriebsstranges respektive des landwirtschaftlichen Fahrzeugs das Antreiben von Vorderachse und der weiteren Fahrzeugachse drehzahlgekoppelt erfolgen. Das Hauptantriebselement ist insbesondere als ein Verbrennungsmotor ausgebildet.

Erfindungsgemäss muss dem Antriebsstrang zumindest eine Steuerungsvorrichtung zugeordnet sein, welche zumindest zur Ansteuerung der Drehmomentübertragungsvorrichtung in Abhängigkeit von einem Betriebsmodus des Antriebsstranges eingerichtet ist. Dabei können mehrere unterschiedliche Betriebsmodi vorgesehen sein, die insbesondere auswählbar und der zumindest einen Steuerungsvorrichtung zur Ansteuerung der Drehmomentübertragungsvorrichtung vorgebbar sind. Einen Betriebsmodus kann die Straßenfahrt oder die Transportfahrt auf der Straße, d.h. das Mitführen eines Anhängers, bilden. Einen weiteren Betriebsmodus kann die Fahrt des landwirtschaftlichen Fahrzeugs auf einem Feld bilden, welche insbesondere der Bearbeitung des Feldes oder als Begleitgespann einer Erntemaschine dient. In dem Betriebsmodus Feldfahrt kann die Lenkunterstützung durch das Erhöhen der Drehzahl im vorderen Teilantriebsstrang zum Tragen kommen, um kleine Wenderadien zu ermöglichen. Weiterhin kann ein Betriebsmodus das Rangieren des landwirtschaftlichen Fahrzeugs, insbesondere auf einer Hofstätte, betreffen.

Insbesondere kann der Elektromotor in Abhängigkeit von einem Betriebsmodus des Antriebsstranges generatorisch betreibbar sein. Der generatorische Betrieb des Elektromotors aufgrund der Ansteuerung der Drehmomentübertragungsvorrichtung durch die zumindest eine Steuerungsvorrichtung ist im Betriebsmodus Straßenfahrt oder Transportfahrt sinnvoll. Insbesondere in diesen Betriebsmodi kann der Elektromotor zur Rekuperation elektrischer Energie genutzt werden. Zudem kann der generatorisch betreibbare Elektromotor zur Erzeugung eines Bremsmomentes verwendet werden, um zur Bremsunterstützung vorzugsweise im Betriebsmodus Straßenfahrt oder Transportfahrt beizutragen. Die Ansteuerung des Elektromotors, um diesen in Abhängigkeit von dem Betriebsmodus motorisch oder generatorisch zu betreiben, kann dabei gleichfalls durch die Steuerungsvorrichtung erfolgen.

Erfindungsgemäss wird der Elektromotor einen vom Betriebszustand des Hauptantriebelementes unabhängigen Antrieb zumindest der Vorderachse ermöglichen. Im Betriebsmodus Rangieren des landwirtschaftlichen Fahrzeugs ermöglicht der Elektromotor das Antreiben wahlweise der Vorderachse oder der Vorderachse und der zumindest einer weiteren Fahrzeugachse bei abgeschaltetem Hauptantriebselement.

Insbesondere kann die Drehmomentübertragungsvorrichtung als eine schaltbare Kupplungseinrichtung ausgeführt sein. Dies stellt eine besonders einfache und kostengünstige Ausführung der ansteuerbaren Drehmomentübertragungsvorrichtung dar.

Gemäß einer bevorzugten Weiterbildung kann die Drehmomentübertragungsvorrichtung als eine schaltbare Kupplungseinrichtung mit einer Art Freilauffunktion ausgeführt sein. Durch eine solche Drehmomentübertragungsvorrichtung kann eine kurzzeitige Drehzahlerhöhung zur Lenkunterstützung beim Lenken ohne eine Unterbrechung der Verbindung durch die Kupplung in dem Antriebsstrang zwischen der Vorderachse und der zumindest einen weiteren Fahrzeugachse ermöglicht werden.

Gemäß einer bevorzugten Weiterbildung kann die Drehmomentübertragungsvorrichtung als ein Getriebe ausgebildet sein. Die Ausbildung der Drehmomentübertragungsvorrichtung als ein Getriebe ermöglicht eine Variation der Drehzahlverhältnisse, die durch den Antriebsstrang auf die Vorderachse übertragen werden. Insbesondere kann in Abhängigkeit von Achslasten an der Vorderachse und der zumindest einen weiteren Fahrzeugachse ein Drehzahlverhältnis eingestellt werden, um im Allradbetrieb eine größtmögliche Traktion zu erreichen.

Bevorzugt kann die als Getriebe ausgebildete Drehmomentübertragungsvorrichtung als ein Planetengetriebe oder ein CVT-Getriebe ausgeführt sein. Hierdurch lassen sich die Funktionen des wahlweisen Trennens des Teilantriebsstranges von dem Antriebsstrang und der Variation der Drehzahlverhältnisse zwischen der Vorderachse und der weiteren Fahrzeugachse in einem Bauteil zusammenfassen.

Gemäß dem Anspruch 7 wird ein landwirtschaftliches Fahrzeug mit einer lenkbaren Vorderachse und zumindest einer weiteren Fahrzeugachse sowie einem Antriebsstrang zum wahlweisen Antreiben der Vorderachse und/oder der zumindest einer weiteren Fahrzeugachse vorgeschlagen, dadurch gekennzeichnet, dass der Antriebsstrang nach einem der Ansprüche 1 bis 6 ausgeführt ist. Das landwirtschaftliche Fahrzeug zeichnet sich durch eine verbesserte Manövrierbarkeit aufgrund kleinerer Wenderadien aus, was insbesondere bei Feldfahrten im Vorgewende vorteilhaft ist. Die Lenkunterstützung trägt auch zu einer Komforterhöhung bei.

Vorzugsweise kann das landwirtschaftliche Fahrzeug zumindest ein elektrisches Bordnetz aufweisen, welches den Elektromotor mit einer Speichervorrichtung für elektrische Energie verbindet. Durch die Anbindung an die Speichervorrichtung kann dem Elektromotor die für den motorischen Betrieb notwendige elektrische Energie bereitgestellt werden. Bei entsprechender Ansteuerung der Drehmomentübertragungsvorrichtung durch die zumindest eine Steuerungsvorrichtung zur Lenkunterstützung kann eine Erhöhung der Antriebsdrehzahl der von dem Antriebsstrang auf die Vorderachse übertragenen Antriebsdrehzahl gegenüber der von dem Antriebsstrang bereitgestellten Antriebsdrehzahl an der weiteren Fahrzeugachse bewirkt werden. Hierbei kann die zumindest eine Steuerungsvorrichtung zur unmittelbaren Ansteuerung der schaltbaren Kupplung zur Zuschaltung oder Unterbrechung der trieblichen Verbindung von Vorderachse und der zumindest einen weiteren Fahrzeugachse des Antriebsstranges eingerichtet sein. Denkbar ist auch, dass der schaltbaren Kupplung zur Zuschaltung oder Unterbrechung der trieblichen Verbindung von Vorderachse und der zumindest einen weiteren Fahrzeugachse durch den Antriebsstrang eine weitere Steuerungsvorrichtung zugeordnet ist, die von der Steuerungsvorrichtung zur Ansteuerung der Drehmomentübertragungsvorrichtung ansteuerbar ist. Im generatorischen Betrieb des Elektromotors kann dieser mittels des zumindest einen Bordnetzes elektrische Energie in die Speichervorrichtung einspeisen. Zudem lässt sich im generatorischen Betrieb ein Bremsmoment erzeugen, um zur Bremsunterstützung des Fahrzeugs, vorzugsweise im Betriebsmodus Straßenfahrt oder Transportfahrt, beizutragen.

Insbesondere kann das elektrische Bordnetz als ein Mehrspannungsbordnetz ausgeführt sein. Dabei kann ein Teil des Bordnetzes mit einer höheren Niedergleichspannung, beispielsweise mit einer Gleichspannung von 48 V oder 60 V, betreibbar sein. Ein weiterer Teil des Bordnetzes kann mit einer niedrigeren Niedergleichspannung, insbesondere einer Gleichspannung von 12 V, betreibbar sein. Hierbei kann der Elektromotor vorzugsweise mit dem Teil des Bordnetzes verbunden sein, welches mit der höheren Niedergleichspannung betrieben wird, was zu einer höheren Effizienz beim Betreiben des Elektromotors führt.

Gemäß einer bevorzugten Weiterbildung kann die Steuerungsvorrichtung zur Bestimmung von unterschiedlichen Betriebsmodi eingerichtet sein. Denkbar ist dabei, dass fahrsituationsabhängig ein Betriebsmodus von einer Bedienperson des landwirtschaftlichen Fahrzeugs auswählbar ist und der Steuerungsvorrichtung vorgegeben wird. Zusätzlich oder alternativ kann in Abhängigkeit von der Betätigung eines Betätigungselementes zum Ein- oder Abschalten des Allradantriebes ein Betriebsmodus bestimmt werden, wodurch eine Unterscheidung zwischen einem Betriebsmodus Straßenfahrt oder Transportfahrt und einem Betriebsmodus Feldfahrt ermöglicht wird. Zusätzlich könnte für eine Auswahl eines Betriebsmodus Rangieren mittels einer mit der Steuerungsvorrichtung mittelbar oder unmittelbar verbundenen Ein- und Ausgabeeinheit vorgesehen sein. Die Ein- und Ausgabeeinheit kann einer übergeordneten Steuerungseinheit des landwirtschaftlichen Fahrzeugs zugeordnet sein, um beispielsweise die Auswahl des Betriebsmodus Rangieren oder auch eines anderen Betriebsmodus zu ermöglichen. Diese Auswahl ist von übergeordneten Steuerungseinheit an die Steuerungsvorrichtung übertragbar. Im Betriebsmodus Rangieren kann wahlweise der Antrieb der Vorderachse oder der Vorderachse und der weiteren Fahrzeugachse ausschließlich mittels des Elektromotors erfolgen, d.h. bei abgeschaltetem Hauptantriebselement erfolgen.

Die vorliegende Erfindung wird nachstehend anhand eines in den Zeichnungen dargestellten Ausführungsbeispieles näher erläutert.

Es zeigen:
- Fig. 1: eine schematische Seitenansicht eines landwirtschaftlichen Fahrzeugs;
- Fig. 2: eine schematisierte Ansicht eines Antriebsstrangs gemäß Fig. 1.

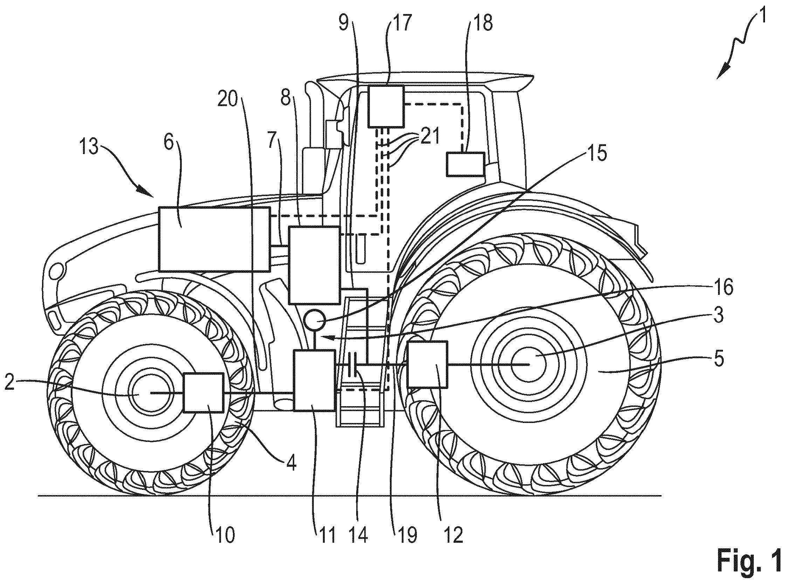

Die Darstellung in Fig. 1 zeigt eine schematische Ansicht eines als landwirtschaftliches Fahrzeug ausgeführten Traktors 1. Der Traktor 1 umfasst eine Vorderachse 2 und zumindest eine weitere Fahrzeugachse 3, die nachfolgend als Hinterachse bezeichnet wird. Zumindest die Vorderachse 2 ist als lenkbare Achse ausgeführt. An der Vorderachse 2 sind ein erstes Paar Reifen 4 angeordnet, an der Hinterachse 3 sind ein zweites Paar Reifen 5 angeordnet, wobei die Durchmesser der Reifen 4 und 5 voneinander abweichen. An der Hinterachse 3 können anstelle der Reifen 5 alternativ auch Raupen angeordnet sein, so dass das Fahrzeug als Halbraupe ausbildbar ist. Des Weiteren umfasst der Traktor 1 ein Hauptantriebselement 6, welches im Allgemeinen als ein Verbrennungsmotor ausgeführt ist. Das Hauptantriebselement 6 ist durch eine Antriebswelle 7 mit einem Hauptgetriebe 8 verbunden. Das Hauptgetriebe 8 ist als ein eine stufenlos änderbare Abtriebsdrehzahl bereitstellendes Getriebe, ein sogenanntes hydrostatisch-mechanisch leistungsverzweigtes Getriebe, kurz CVT-Getriebe, ausgeführt. Über die Antriebswelle 7 wird das von dem Hauptantriebselement 6 bereitgestellte Drehmoment auf das Hauptgetriebe 8 übertragen. Das Hauptgetriebe 8 ist durch eine Abtriebswelle 9 mit einem Antriebsstrang 13 verbunden, welcher der Übertragung des von dem Hauptgetriebe 8 übersetzten Drehmomentes und der Drehzahl wahlweise auf die Vorderachse 2 und/oder die Hinterachse 3 dient. Bevorzugt wird zumindest die Hinterachse 3 angetrieben. Der Antriebsstrang 13 ist durch eine schaltbare Kupplung 14 unterbrechbar, so dass wahlweise die Hinterachse 3 oder die Vorderachse 2 und die Hinterachse 3 durch das Hauptantriebselement 6 antreibbar sind.

Der Antriebsstrang 13 umfasst weiterhin ein erstes Differential 10, welches mit der Vorderachse 2 trieblich verbunden ist, und ein zweites Differential 12, welches mit der Hinterachse 3 trieblich verbunden ist. Weiterhin ist ein Teilantriebsstrang 16 vorgesehen, umfassend nur einen Elektromotor 15 sowie insbesondere genau eine ansteuerbare Drehmomentübertragungsvorrichtung 11, durch welche der Elektromotor 15 wahlweise mit dem Antriebsstrang 13 trieblich verbindbar ist. Zwischen der Drehmomentübertragungsvorrichtung 11 und dem ersten Differential 10 bzw. dem zweiten Differential 12 ist jeweils eine Welle 19, 20 angeordnet. Die Wellen 19, 20 sind durch die schaltbare Kupplung 14 miteinander verbindbar. Zur Ansteuerung der Drehmomentübertragungsvorrichtung 11 steht diese durch eine, insbesondere bidirektionale, Steuerleitung 21 mit einer Steuerungsvorrichtung 17 in Verbindung. Diese Steuerungsvorrichtung 17 kann weiterhin mittels weiterer Steuerleitungen 21 mit dem Hauptantriebselement 6 sowie dem Hauptgetriebe 8 zwecks deren Ansteuerung in Verbindung stehen. Die Steuerungsvorrichtung 17 kann unmittelbar mit einer in einer Kabine des Fahrzeugs 1 angeordneten Ein- und Ausgabeeinheit 18 Verbindung stehen, durch welche von einer Bedienperson eingegebene Daten an die Steuerungsvorrichtung 17 übertragen oder von dieser empfangen und ausgegeben werden können. Denkbar ist aber auch, dass die Steuerungsvorrichtung 17 mittelbar durch eine übergeordnete Steuerungseinheit mit der Ein- und Ausgabeeinheit 18 verbunden ist.

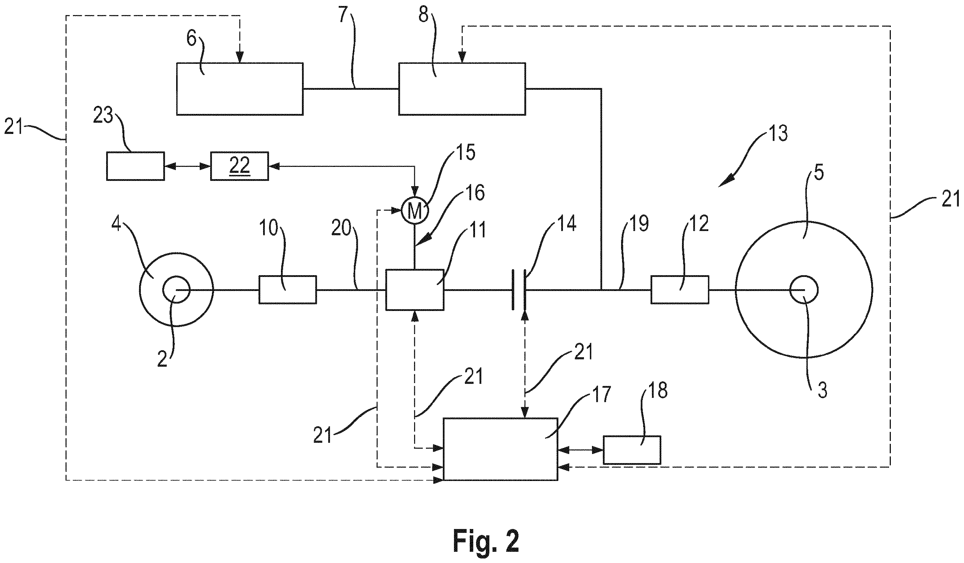

Die Darstellung in Fig. 2 zeigt eine schematisierte Ansicht des Antriebsstranges 13 gemäß Fig. 1. An dem Teilantriebsstrang 16 ist der eine, insbesondere nur eine, Elektromotor 15 angeordnet. Der Elektromotor 15 ist durch die ansteuerbare Drehmomentübertragungsvorrichtung 11 mit dem Antriebsstrang 13 wahlweise trieblich verbindbar. Das als Traktor 1 ausgeführte landwirtschaftliche Fahrzeug weist ein Bordnetz 22 auf. Der Elektromotor 15 ist an das Bordnetz 22 angeschlossen, welches bevorzugt als ein Mehrspannungsbordnetz ausgeführt ist. Dabei ist ein Teil des Bordnetzes 22 mit einer höheren Niedergleichspannung, beispielsweise mit einer Gleichspannung von 48 V oder 60 V, und ein anderer Teil ist mit einer niedrigeren Niedergleichspannung betreibbar, insbesondere einer Gleichspannung von 12 V. Hierbei ist der Elektromotor 15 vorzugsweise mit dem Teil des Bordnetzes 22, welches mit der höheren Niedergleichspannung betrieben wird, verbunden. An das Bordnetz 22 ist eine Speichervorrichtung 23 für elektrische Energie angeschlossen. Die Speichervorrichtung 23 kann dem Elektromotor 15 die für den motorischen Betrieb erforderliche elektrische Energie zur Verfügung stellen. Insbesondere ermöglicht die Speichervorrichtung 23 den Betrieb des Elektromotors 15 unabhängig von dem Hauptantriebselement 6, insbesondere wenn dieses abgeschaltet ist. Umgekehrt dient die Speichervorrichtung 23 dazu, um während des generatorischen Betriebes des Elektromotors 15 erzeugte elektrische Energie zu speichern.

Die Ansteuerung der Drehmomentübertragungsvorrichtung 11 durch die Steuerungsvorrichtung 17 erfolgt in Abhängigkeit von einem Betriebsmodus des Antriebsstranges 13 respektive des Traktors 1. Durch die Ansteuerung der Drehmomentübertragungsvorrichtung 11 wird der Elektromotor 15 mit dem Teilantriebsstrang 16 trieblich verbunden. Dabei sind mehrere unterschiedliche Betriebsmodi vorgesehen sein, die insbesondere auswählbar und der zumindest einen Steuerungsvorrichtung 17 zur Ansteuerung der Drehmomentübertragungsvorrichtung 11 vorgebbar sind. Einen Betriebsmodus kann die Straßenfahrt oder die Transportfahrt, d.h. das Mitführen eines Anhängers, des Traktors 1 auf der Straße bilden.

Einen weiteren Betriebsmodus kann die Fahrt des Fahrzeugs 1 auf einem Feld bilden, welche insbesondere der Bearbeitung des Feldes oder dem Begleiten einer Erntemaschine als Zuggespann mit einem Transportwagen dient. In dem Betriebsmodus Feldfahrt kommt die Lenkunterstützung durch das Erhöhen der Drehzahl an der Vorderachse 2 durch das Zuschalten des Elektromotors 15 in dem Teilantriebsstrang 16 zum Tragen, was insbesondere bei engen Kurvenfahrten im Vorgewende eines Feldes vorteilhaft ist, um kleinere Kurvenradien fahren zu können.

Weiterhin kann ein Betriebsmodus das Rangieren des landwirtschaftlichen Fahrzeugs1, insbesondere auf einer Hofstätte, betreffen. Für das Rangieren kann das Hauptantriebselement 6 abgeschaltet sein, d.h. der Antrieb zumindest der Vorderachse 2 des Fahrzeugs 1 erfolgt durch den Elektromotor 15 unabhängig vom Betriebszustand des Hauptantriebselementes 6. Der Betriebsmodus Rangieren ist mittels der Ein- und Ausgabeeinheit 18 auswählbar.

Gemäß einer ersten Ausführungsform ist die Drehmomentübertragungsvorrichtung 11 als eine schaltbare Kupplungseinrichtung ausgeführt. Dies stellt eine besonders einfache und kostengünstige Ausführung der ansteuerbaren Drehmomentübertragungsvorrichtung 11 dar.

Gemäß einer weiteren Ausführungsform ist die Drehmomentübertragungsvorrichtung 11 als eine schaltbare Kupplungseinrichtung mit einer Art Freilauffunktion ausgeführt sein. Durch eine solche Drehmomentübertragungsvorrichtung 11 kann eine kurzzeitige Drehzahlerhöhung zur Lenkunterstützung beim Lenken ohne eine Unterbrechung der Verbindung zwischen dem Antriebsstrang 13 und dem durch den Teilantriebsstrang 16 trieblich gekoppelten Elektromotor 15 ermöglicht werden, ohne durch eine entsprechende Ansteuerung der Kupplung 14 den Antriebsstrang 13 zwischen der Vorderachse 2 und der Hinterachse 3 unterbrechen zu müssen.

Gemäß einer bevorzugten Weiterbildung kann die Drehmomentübertragungsvorrichtung 11 als ein Getriebe ausgebildet sein. Die Ausbildung der Drehmomentübertragungsvorrichtung 11 als ein Getriebe ermöglicht eine Variation der Drehzahlverhältnisse, die mittels des Teilantriebsstranges 16 auf den Antriebsstrang 13 zum Antreiben der Vorderachse 2 übertragen werden. Insbesondere kann in Abhängigkeit von Achslasten an der Vorderachse 2 und der zumindest einen weiteren Fahrzeugachse 3 ein Drehzahlverhältnis eingestellt werden, um im Allradbetrieb eine größtmögliche Traktion zu erreichen.

Bevorzugt kann die als Getriebe ausgeführte Drehmomentübertragungsvorrichtung 11 als ein Planetengetriebe oder ein CVT-Getriebe ausgeführt sein. Hierdurch lassen sich die Funktionen des wahlweisen Trennens des Teilantriebsstranges 16 von dem Antriebsstrang 13 und der Variation der Drehzahlverhältnisse zwischen der Vorderachse 2 und der weiteren Fahrzeugachse 3 in einem Bauteil zusammenfassen.

### Bezugszeichenliste

- 1: Fahrzeug
- 2: Vorderachse
- 3: Fahrzeugachse/Hinterachse
- 4: Rad
- 5: Rad
- 6: Hauptantriebselement
- 7: Antriebswelle
- 8: Hauptgetriebe
- 9: Abtriebswelle
- 10: Differential
- 11: Drehmomentübertragungsvorrichtung
- 12: Differential
- 13: Antriebsstrang
- 14: Kupplung
- 15: Elektromotor
- 16: Teilantriebsstrang
- 17: Steuerungsvorrichtung
- 18: Ein- und Ausgabeeinheit
- 19: Welle
- 20: Welle
- 21: Steuerleitung
- 22: Bordnetz
- 23: Speichervorrichtung

## Patentansprüche

1. Antriebsstrang (13) für ein landwirtschaftliches Fahrzeug (1) mit einer lenkbaren Vorderachse (2) und zumindest einer weiteren Fahrzeugachse (3), wobei der Antriebsstrang (13) ein Hauptantriebselement (6) zur Bereitstellung eines Drehmomentes, welches mittels einer Antriebswelle (7) auf ein Hauptgetriebe (8) übertragbar ist, sowie eine schaltbare Kupplung (14) zum wahlweisen Antreiben der Vorderachse (2) in Verbindung mit der weiteren Fahrzeugachse (3) umfasst, wobei das Hauptgetriebe (8) trieblich mit der Vorderachse (2) und/oder der weiteren Fahrzeugachse (3) verbindbar und das Drehmoment zum Antreiben der Vorderachse (2) und/oder der weiteren Fahrzeugachse (3) auf diese verteilbar ist, **dadurch gekennzeichnet, dass** ein Teilantriebsstrang (16) vorgesehen ist, an dem nur ein Elektromotor (15) angeordnet ist, und der Elektromotor (15) durch genau eine ansteuerbare Drehmomentübertragungsvorrichtung (11) mit dem Antriebsstrang (13) trieblich verbindbar ist, wobei dem Antriebsstrang (13) zumindest eine Steuerungsvorrichtung (17) zugeordnet ist, welche zumindest zur Ansteuerung der Drehmomentübertragungsvorrichtung (11) in Abhängigkeit von einem Betriebsmodus des Antriebsstranges (13) eingerichtet ist und in einem Betriebsmodus der Elektromotor (15) einen vom Betriebszustand des Hauptantriebselementes (6) unabhängigen Betrieb zumindest der Vorderachse (2) ermöglicht, wobei der unabhängige Betrieb der Vorderachse als Lenkunterstützung eingerichtet ist, die durch Zuschaltung des Elektromotors (15) eine Erhöhung der Drehzahl an der Vorderachse (2) ermöglicht.

2. Antriebsstrang (13) nach Anspruch 1, **dadurch gekennzeichnet, dass** der Elektromotor (15) in Abhängigkeit von einem Betriebsmodus des Antriebsstranges (13) generatorisch betreibbar ist.

3. Antriebsstrang (13) nach einem der Ansprüche 1 und 2, **dadurch gekennzeichnet, dass** die Drehmomentübertragungsvorrichtung (11) als eine schaltbare Kupplungsvorrichtung ausgeführt ist.

4. Antriebsstrang (13) nach einem der Ansprüche 1 bis 3, **dadurch gekennzeichnet, dass** die Drehmomentübertragungsvorrichtung (11) als eine schaltbare Kupplungsvorrichtung mit einer Freilauffunktion ausgeführt ist.

5. Antriebsstrang (13) nach einem der vorangehenden Ansprüche, **dadurch gekennzeichnet, dass** die Drehmomentübertragungsvorrichtung (11) als ein Getriebe ausgebildet ist.

6. Antriebsstrang (13) nach Anspruch 5, **dadurch gekennzeichnet, dass** die als Getriebe ausgeführte Drehmomentübertragungsvorrichtung (11) als ein Planetengetriebe oder ein CVT-Getriebe ausgebildet ist.

7. Landwirtschaftliches Fahrzeug (1) mit einer lenkbaren Vorderachse (2) und zumindest einer weiteren Fahrzeugachse (3) sowie einem Antriebsstrang (13) zum wahlweisen Antreiben der Vorderachse (2) und/oder der zumindest einer weiteren Fahrzeugachse (3), **dadurch gekennzeichnet, dass** der Antriebsstrang (13) nach einem der Ansprüche 1 bis 6 ausgeführt ist.

8. Landwirtschaftliches Fahrzeug (1) nach Anspruch 7, **dadurch gekennzeichnet, dass** das Fahrzeug zumindest ein elektrisches Bordnetz (22) aufweist, welches den Elektromotor (15) mit einer Speichervorrichtung (23) für elektrische Energie verbindet.

9. Landwirtschaftliches Fahrzeug (1) nach Anspruch 8, **dadurch gekennzeichnet, dass** das elektrische Bordnetz (22) als ein Mehrspannungsbordnetz ausgeführt ist.

10. Landwirtschaftliches Fahrzeug (1) nach einem der Ansprüche 7 bis 9, **dadurch gekennzeichnet, dass** die Steuerungsvorrichtung (17) zur Bestimmung von unterschiedlichen Betriebsmodi des landwirtschaftlichen Fahrzeugs (1) eingerichtet ist.

## Claims

1. A drive train (13) for an agricultural vehicle (1) with a steerable front axle (2) and at least one further vehicle axle (3), wherein the drive train (13) comprises a main drive element (6) for the provision of a torque which can be transmitted to a main transmission (8) by means of a drive shaft (7), as well as a selectable clutch (14) for electively driving the front axle (2) in conjunction with the further vehicle axis (3), wherein the main transmission (8) can be operatively connected to the front axle (2) and/or the further vehicle axle (3) and the torque can be distributed thereto in order to drive the front axle (2) and/or the further vehicle axle (3), **characterized in that** a secondary drive train (16) is provided on which only an electric motor (15) is disposed, and the electric motor (15) can be operatively connected to the drive train (13) by means of exactly one controllable torque transmission device (11), wherein at least one control device (17) is associated with the drive train (13) and is configured to control at least the torque transmission device (11) as a function of an operational mode of the drive train (13) and in one operational mode, the electric motor (15) enables operation of at least the front axle (2), which operation being independent of the operational state of the main drive element (6), wherein the independent operation of the front axle is configured in the form of steering assistance which enables the speed of the front axle (2) to be increased by connecting up the electric motor (15).

2. The drive train (13) according to claim 1, **characterized in that** the electric motor (15) can be operated as a generator as a function of an operational mode of the drive train (13).

3. The drive train (13) according to claim 1 or claim 2, **characterized in that** the torque transmission device (11) is implemented as a selectable clutch device.

4. The drive train (13) according to one of claims 1 to 3, **characterized in that** the torque transmission device (11) is implemented as a selectable clutch device with a free running function.

5. The drive train (13) according to one of the preceding claims, **characterized in that** the torque transmission device (11) is constructed as a transmission.

6. The drive train (13) according to claim 5, **characterized in that** the torque transmission device (11) implemented as a transmission is constructed as a planetary transmission or a CVT.

7. An agricultural vehicle (1) with a steerable front axle (2) and at least one further vehicle axle (3) as well as a drive train (13) for electably driving the front axle (2) and/or the at least one further vehicle axle (3), **characterized in that** the drive train (13) is implemented in accordance with one of claims 1 to 6.

8. The agricultural vehicle (1) according to claim 7, **characterized in that** the vehicle has at least one electrical supply system (22) which connects the electric motor (15) to a storage device for electrical energy (23).

9. The agricultural vehicle (1) according to claim 8, **characterized in that** the electrical supply system (22) is implemented as a multiple voltage supply system.

10. The agricultural vehicle (1) according to one of claims 7 to 9, **characterized in that** the control device (17) is configured for the determination of different operational modes of the agricultural vehicle (1).

## Revendications

1. Chaîne de transmission (13) pour un véhicule agricole (1) comprenant un essieu avant directeur (2) et au moins un autre essieu de véhicule (3), la chaîne de transmission (13) incluant un élément d'entraînement principal (6) pour fournir un moment de rotation, lequel est transmissible à une transmission principale (8) au moyen d'un arbre d'entraînement (7), ainsi que comprenant un accouplement temporaire (14) pour l'entraînement sélectif de l'essieu avant (2) en liaison avec l'autre essieu de véhicule (3), la transmission principale (8) pouvant être reliée de manière motrice à l'essieu avant (2) et/ou à l'autre essieu de véhicule (3) et le moment de rotation pour entraîner l'essieu avant (2) et/ou l'autre essieu de véhicule (3) pouvant être réparti sur ceux-ci, **caractérisée en ce qu'**il est prévu une chaîne partielle de transmission (16) sur laquelle n'est disposé qu'un moteur électrique (15) et le moteur électrique (15) peut être relié à la chaîne de transmission (13) de manière motrice par l'intermédiaire d'exactement un dispositif de transmission de moment de rotation commandable (11), à la chaîne de transmission (13) étant associé au moins un dispositif de commande (17) qui est conçu au moins pour commander le dispositif de transmission de moment de rotation (11) en fonction du mode de fonctionnement de la chaîne de transmission (13) et, dans un mode de fonctionnement, le moteur électrique autorisant un fonctionnement au moins de l'essieu avant (2) indépendant de l'état de fonctionnement de l'élément d'entraînement principal (6), le fonctionnement indépendant de l'essieu avant étant conformé en assistance à la direction qui, par activation du moteur électrique (15), permet d'augmenter la vitesse de rotation sur l'essieu avant (2).

2. Chaîne de transmission (13) selon la revendication 1, **caractérisée en ce que** le moteur électrique (15) peut fonctionner en génératrice en fonction d'un mode de fonctionnement de la chaîne de transmission (13).

3. Chaîne de transmission (13) selon une des revendications 1 et 2, **caractérisée en ce que** le dispositif de transmission de moment de rotation (11) est conformé en dispositif d'accouplement temporaire.

4. Chaîne de transmission (13) selon une des revendications 1 à 3, **caractérisée en ce que** le dispositif de transmission de moment de rotation (11) est conformé en dispositif d'accouplement temporaire avec une fonction de roue libre.

5. Chaîne de transmission (13) selon une des revendications précédentes, **caractérisée en ce que** le dispositif de transmission de moment de rotation (11) est conformé en transmission.

6. Chaîne de transmission (13) selon la revendication 5, **caractérisée en ce que** le dispositif de transmission de moment de rotation (11) conformé en transmission est conçu sous la forme d'un engrenage planétaire ou d'une transmission CVT.

7. Véhicule agricole (1) comprenant un essieu avant directeur (2) et au moins un autre essieu de véhicule (3) ainsi qu'une chaîne de transmission (13) pour l'entraînement sélectif de l'essieu avant (2) et/ou du au moins un autre essieu de véhicule (3), **caractérisé en ce que** la chaîne de transmission (13) est conçue selon une des revendications 1 à 6.

8. Véhicule agricole (1) selon la revendication 7, **caractérisé en ce que** le véhicule comporte au moins un réseau électrique de bord (22) qui relie le moteur électrique (15) à un dispositif accumulateur (23) pour de l'énergie électrique.

9. Véhicule agricole (1) selon la revendication 8, **caractérisé en ce que** le réseau électrique de bord (22) est conformé en réseau de bord multitension.

10. Véhicule agricole (1) selon une des revendications 7 à 9, **caractérisé en ce que** le dispositif de commande (17) est conçu pour déterminer différents modes de fonctionnement du véhicule agricole (1).
